(19)

**Europäisches Patentamt**
**European Patent Office**
**Office européen des brevets**

(11) **EP 3 093 822 B1**

(12) **EUROPEAN PATENT SPECIFICATION**

(45) Date of publication and mention
of the grant of the patent:
**27.03.2019 Bulletin 2019/13**

(51) Int Cl.:
***G06T 7/20*** (2017.01)

(21) Application number: **16167816.4**

(22) Date of filing: **29.04.2016**

(54) **DISPLAYING A TARGET OBJECT IMAGED IN A MOVING PICTURE**

DARSTELLUNG EINES IN EINER BILDSEQUENZ ABGEBILDETEN ZIELOBJEKTS

AFFICHAGE D'UN OBJET CIBLE IMAGÉ DANS UNE SÉQUENCE D'IMAGES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.05.2015 JP 2015098132**

(43) Date of publication of application:
**16.11.2016 Bulletin 2016/46**

(73) Proprietor: **Ricoh Company, Ltd.**
**Tokyo 143-8555 (JP)**

(72) Inventor: **HARA, Takayuki**
**Ohta-ku, Tokyo 143-8555 (JP)**

(74) Representative: **White, Duncan Rohan**
**Marks & Clerk LLP**
**Fletcher House (2nd Floor)**
**Heatley Road**
**The Oxford Science Park**
**Oxford OX4 4GE (GB)**

(56) References cited:
**EP-A1- 2 031 864      US-A1- 2012 281 104**
**US-B1- 6 924 832**

- **KIM C NG ET AL: "An integrated surveillance system-human tracking and view synthesis using multiple omni-directional vision sensors", IMAGE AND VISION COMPUTING, vol. 22, no. 7, 1 July 2004 (2004-07-01), pages 551-561, XP055308278, GUILDFORD, GB ISSN: 0262-8856, DOI: 10.1016/j.imavis.2003.09.009**
- **BEN BENFOLD ET AL: "Stable multi-target tracking in real-time surveillance video", COMPUTER VISION AND PATTERN RECOGNITION (CVPR), 2011 IEEE CONFERENCE ON, IEEE, 20 June 2011 (2011-06-20), pages 3457-3464, XP032038169, DOI: 10.1109/CVPR.2011.5995667 ISBN: 978-1-4577-0394-2**
- **S. K. NAYAR: "Omnidirectional Vision", BMVC 98. PROCEEDINGS OF THE NINTH BRITISH MACHINE VISION CONFERENCE UNIV. SOUTHAMPTON SOUTHAMPTON, UK, 1 January 1998 (1998-01-01), pages 1.1-1.12, XP055308288, DOI: 10.5244/C.12.1 ISBN: 978-1-901725-04-9**

EP 3 093 822 B1

**Description**

**1. Field of the Invention**

The disclosures herein generally relate to an image processing apparatus and an image processing method.

**2. Description of the Related Art**

Compact image processing apparatuses having small screens have recently become popular. Smartphones and heads-up displays are examples of such compact image processing apparatuses. The compact image processing apparatuses may fail to display all images simultaneously on their displays. Owing to improved optical technology and image processing technology, imaging devices capable of capturing wide area images by one shooting have also become popular. The above imaging devices capture wide-angle images composed of a large number of pixels. Hence, some types of information processing apparatuses may fail to display all the wide-angle images simultaneously on their screens. If these wide-angle images are still, a user may easily find a desired target area by scrolling the images; however, if the wide-angle images are captured as a moving picture displaying continuously changing images, it may be difficult to display the desired target area on the screen.

The related art documents propose a technology to specify and display a target area of a moving picture (e.g., Patent Document 1). Patent Document 1 discloses a moving object tracking device configured to store positional information of tracking objects in the previous frames for extracting and tracking the moving objects such as players or athletes in a wide area moving picture with a high degree of accuracy, and calculate predicted positions of the tracking objects in a current frame based on the stored positional information of the stored tracking objects. The moving object tracking device extracts candidate objects having a feature unique to the tracking object from the current frame, and assigns one of the candidate objects closest to the predicted position to be the tracking object.

However, the technology that determines the desired area from the moving picture by detecting and tracking the moving objects may fail to display an appropriate area due to the limitation of tracking accuracy.

For example, the moving picture composed of wide-angle images (the images captured by a fisheye camera or an omnidirectional camera) may have low resolution and may have distortion at some position of the target object in the image, making it difficult to track the target object.

The images captured by the omnidirectional camera may have mutually connected adjacent end parts between the consecutive images in order to exhibit the features of the images captured 360 degrees around the omnidirectional camera. This may require some complicated processes specific to omnidirectional images for tracking the objects that travel across the boundaries of the images.

RELATED ART DOCUMENT

PATENT DOCUMENT

Patent Document 1: Japanese Unexamined Patent Application Publication No. 2004-46647

US-A-6924832 discloses apparatus, methods and computer program products that track movement or a moving object through a warped video image. The warped video image can result from a video camera attached to a warping lens such as a wide-angle lens or panoramic lens. Some embodiments allow a user to select the portion of the image that interests the user for tracking. Other embodiments automatically select and track movement through the warped video image without input from a user. Still other embodiments track when movement comes into proximity with an area-of-interest and will raise an alarm that can be used to start recording of the warped video image or to trigger other alarm responses. Yet other embodiments change the bandwidth allocated to portions of the warped video image sent over a network responsive to the tracked movement so that the movement stays in a quality view.

SUMMARY OF THE INVENTION

Accordingly, it is an object in one embodiment of the present invention to provide a technology capable of tracking a target object in a moving picture with a high degree of accuracy that substantially obviates one or more problems caused by the limitations and disadvantages of the related art.

The invention provides an image processing apparatus and method in accordance with claims 1 and 9.

BRIEF DESCRIPTION OF THE DRAWINGS

FIG. 1A is a diagram illustrating an external view of an image processing apparatus, and FIG. 1B is a system configuration diagram of an image processing system;

FIG. 2 is a diagram illustrating a hardware configuration example of an image processing apparatus and an image processing server;

FIG. 3 is a functional block diagram illustrating an example of the image processing apparatus;

FIG. 4 is a diagram illustrating an example of a pinhole camera model;

FIG. 5 is a diagram schematically illustrating examples of a world coordinate system and a camera coordinate system;

FIG. 6 is a diagram illustrating a relationship between an imaging surface of a wide-angle image and an imaging surface of a virtual camera;

FIG. 7 is a flowchart illustrating a process performed by the image processing apparatus to display partial images;

FIG. 8 is a diagram illustrating a corresponding relationship between an omnidirectional image and an equidistant cylindrical image;

FIG. 9 is a diagram schematically illustrating the imaging surface of the virtual camera with respect to the omnidirectional image;

FIGS. 10A to 10C are diagrams illustrating a process example of detecting saliency; and

FIG. 11 is a diagram illustrating a display example of partial images displayed on an output device.

## DETAILED DESCRIPTION OF THE PREFERRED EMBODIMENTS

The following describes embodiments of the present invention with reference to the accompanying drawings.

### FIRST EMBODIMENT

One of the features of an image processing apparatus is to extract partial images including a position of a target object by perspective projection. Since the partial images include the target object, a searching range for searching for the target object may be narrowed down. Extracting partial images by the perspective projection may reduce the distortion of the image. This indicates that the wide-range image captured 360 degrees around the camera by the fisheye camera or the omnidirectional camera may achieve high tracking accuracy. The following gives detailed illustration.

### CONFIGURATION EXAMPLE

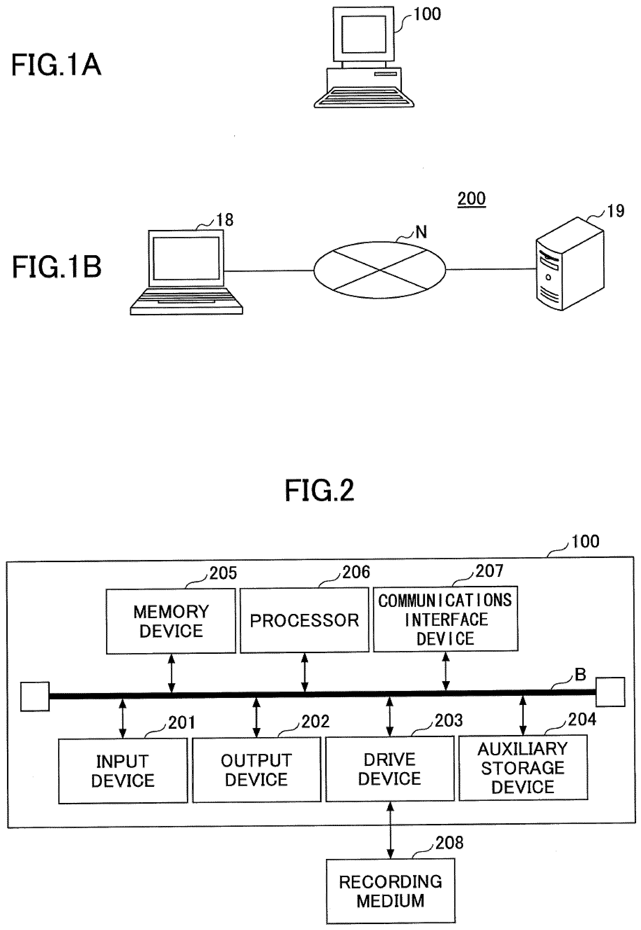

FIG. 1A is a diagram illustrating an example of an external view of an image processing apparatus 100. The image processing apparatus 100 extracts partial images capturing a target object from wide-angle images such as omnidirectional images that form a moving picture. Specific examples of the image processing apparatus 100 may include personal computers (PCs), smartphones, tablet apparatuses, mobile phones, car navigation terminals, wearable computers (head-mounted displays and smart watches), cameras, electronic whiteboards, projectors, gaming machines, or multifunction peripherals, printers, and products.

The image processing apparatus 100 may be disposed in a client-server system as illustrated in FIG. 1B. FIG. 1B is a system configuration diagram illustrating an example of an image processing system 200. The image processing system 200 includes an information processing terminal 18 and an image processing server 19 that are communicatively connected via a network N

In this system, a user accesses the image processing server 19 by operating the information processing terminal 18 to select a desired moving picture. The image processing server 19 extracts partial images capturing the target object, and transmits the extracted partial images to the information processing terminal 18. Since the image processing server 19 only transmits part of the wide-angle image, a transmission time of the moving picture may be reduced. Further, the information processing terminal 18 may only display a part of the image desired by the user.

The process of extracting the partial images may be applied to any aspects of the embodiments. The following describes an aspect in which the image processing apparatus 100 mainly extracts partial images as illustrated in FIG. 1A. Note that the aspect to which the process of extracting the partial images of the embodiment is applied is not limited to the example illustrated in FIG. 1A.

### HARDWARE CONFIGURATION

FIG. 2 is a diagram illustrating an example of a hardware configuration of the image processing apparatus 100 or the image processing server 19. The image processing apparatus 100 includes a configuration as an information processing apparatus. The image processing apparatus 100 includes an input device 201, an output device 202, a drive device 203, an auxiliary storage device 204, a memory device 205, a processor 206, and a communications interface device 207, which are connected to one another via a bus B.

The input device 201 include a mouse and a keyboard configured to input various types of information. The output device 202 may include a display and the like configured to display (output) various types of signals. The drive device 203 is configured to read data or write data with respect to various types of a recording medium 208. Examples of the recording medium 208 include such as a CD-ROM (compact disk read-only memory), a flexible disk, a magneto-optical disk and the like optically, electronically or magnetically recording information; or a recording medium such as a USB memory or a flash memory electrically recording information.

The auxiliary storage device 204 is a nonvolatile storage device such as a hard disk drive (HDD) or a solid state drive (SSD). The auxiliary storage device 204 stores image processing programs, an operating system, moving pictures, other files and data.

The memory device 205 is a main storage device such as DRAM. The memory device 205 stores the image processing programs or moving pictures read from the auxiliary storage device 204.

The processor 206 may be a CPU or the like. The processor 206 controls the overall image processing apparatus 100 in accordance with the image processing programs and the like stored in the memory device 205. The processor 206 may further implement various types of functions and units described later.

The communications interface device 207 may be a modem, a LAN card, and the like configured to perform a process for connecting to the network N.

The image processing programs recorded in an executable format or distributable format may be distributed in a form of the recording medium 208. The image processing programs recorded in a downloadable form may be distributed from a program distribution server apparatus via the network.

Note that the image processing server 19 and the information processing terminal 18 for use in the image processing system 200 may be structured as a typical information processing apparatus, and has a hardware configuration of the image processing server 19 and the information processing terminal 18 is similar to that of the image processing apparatus 100. The hardware configuration of the image processing server 19 and the information processing terminal 18 may differ from that of the image processing apparatus 100; however, such a difference will not interfere with illustrating the embodiments.

FUNCTIONAL CONFIGURATION

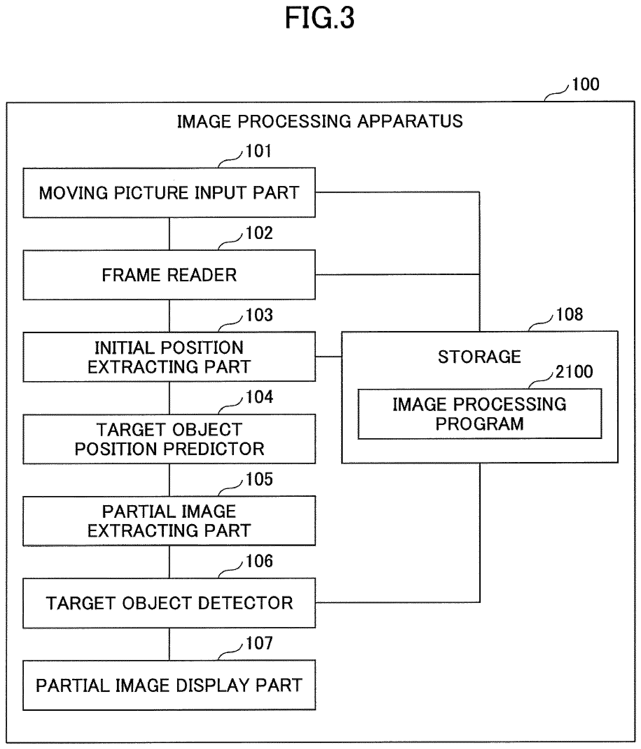

FIG. 3 is a functional block diagram illustrating an example of the image processing apparatus 100. The image processing apparatus 100 includes a moving picture input part 101, a frame reader 102, an initial position extracting part 103, a target object position predictor 104, a partial image extracting part 105, a target object detector 106, a partial image display part 107, and a storage 108.

The above-described components included in the image processing apparatus 100 are functional components or functional parts implemented by causing the components illustrated in FIG. 2 to operate based on instructions from the processor 206 in accordance with an image processing program 2100 loaded from the auxiliary storage device 204 into the memory device 205.

The storage 108 is a volatile or nonvolatile storage device structured, for example, by one or more of the auxiliary storage device 204, the memory device 205 and the drive device 203 illustrated in FIG. 2. The storage 108 stores various types of values (e.g., a position of the target object and a position of the partial image) obtained at extracting the image processing program 2100, and the moving picture of the wide-angle images and the partial images.

The moving picture input part 101 is implemented, for example, by the processor 206, the communications interface device 207, and the auxiliary storage device 204 illustrated in FIG. 2, and configured to receive a moving picture of the wide-angle images from outside.

The frame reader 102 is implemented, for example, by the processor 206 illustrated in FIG. 2, and configured to read a first frame of the moving picture of the wide-angle images. The frame indicates a sheet of an image forming the moving picture, and the frames are stored in a display order.

The initial position extracting part 103 is implemented, for example, by the processor 206 illustrated in FIG. 2, and configured to extract an initial position of a target object from the read frame. For example, the initial position extracting part 103 may display the frame on the output device 202, and prompt the user to circle the target object with a pointing device on the displayed frame. Alternatively, the initial position extracting part 103 may display a type of the target object (e.g., a human and a vehicle) on the output device 202, receive the selected type of the target object from the user, and automatically extract the initial position of the target object. In this case, the initial position extracting part 103 performs template matching with a standard template of the received object to extract the initial position of the target object from the frame. The positon of the target object may be specified based, for example, on a circumscribed rectangle of the target object, and the gravity center (geometric center) of the target object, or the center of the target object. The initial position extracting part 103 may extract a predetermined type of the target object without allowing the user to select the type of the target object.

The target object position predictor 104 is implemented, for example, by the processor 206 illustrated in FIG.

2, and configured to predict a position of the target object in the current frame (current frame: an example of a second frame) of a subsequent display order, based on a position of the target object in the previous frame (an initial frame: an example of a first frame) of a previous display order. As the simplest method, the target object position predictor 104 extracts (determines) the position of the target object in the previous frame to be the position of the target object in the current frame.

The partial image extracting part 105 is implemented, for example, by the processor 206 illustrated in FIG. 2, and configured to extract partial images including the target object from the current frame. One of the features of the first embodiment is the perspective projection for use in extracting the partial images. Details of the perspective projection will be described later.

The target object detector 106 is configured to extract the position of the target object from the partial images of the current frame extracted by the partial image extracting part 105. The method for detecting the target object is not specifically restricted, and an appropriate method may be used as the method for detecting an object from images. For example, an identifier apparatus trained by various types of machine learning using a HOG (Histogram of Oriented Gradients) feature value or a Haar-like feature value extracts a target object. Alternatively, the target object may be detected from the current frame by template matching using the target object from the previous frames. The method of detecting the target object is not specifically limited.

The partial image display part 107 is implemented, for example, by the processor 206 and the output device 202 illustrated in FIG. 2, and configured to display the partial images extracted by the partial image extracting part 105 on the output device 202 (an example of a display device).

EXTRACTING PARTIAL IMAGES

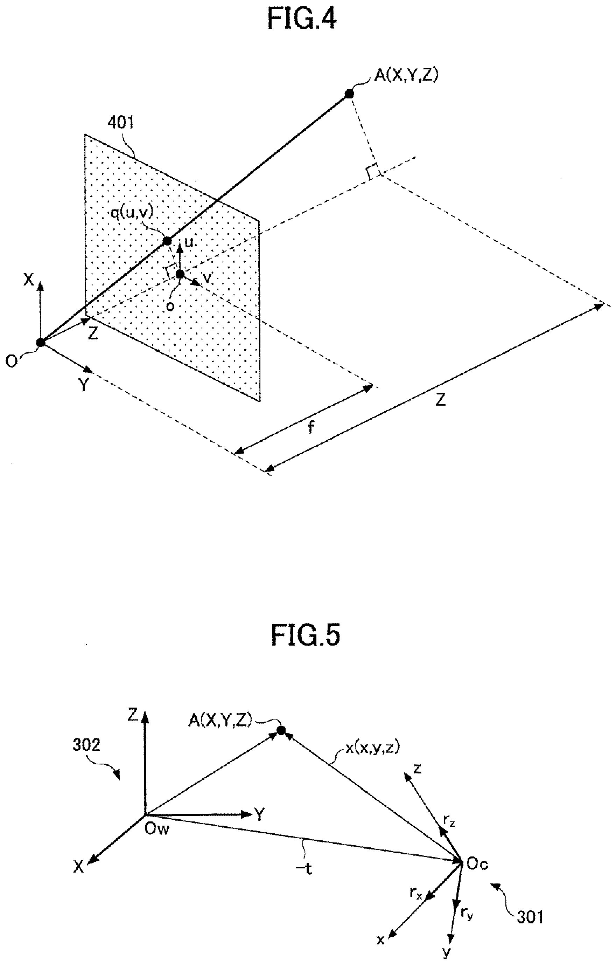

The following describes an operational process of the partial image extracting part 105 with reference to FIGS. 4 to 6. The partial image extracting part 105 extracts the partial images from the current frame to include the position of the target object. The position of the target object may be given as the initial position or may be predicted by the target object position predictor 104. The position of the target object is known (e.g., the gravity center or the center of the circumscribed rectangle) regardless of the above cases.

The first embodiment extracts the partial images by a method called "perspective projection". The preparation for the perspective projection is illustrated as follows. The perspective projection indicates a projection method of mapping (projecting) three-dimensional coordinates onto a two-dimensional plane. A three-dimensional object is mapped onto a two-dimensional plane as viewed from the eye perspective.

FIG. 4 is a diagram illustrating an example of a pinhole camera model. Since the pinhole camera forms a reverse image, a camera imaging surface 401 illustrated in FIG. 4 is disposed toward an object from the projection center O so as not to reverse the image on the camera imaging surface 401. A focal distance f indicates a distance from the projection center O to the camera imaging surface 401.

A Z axis is a direction passing through the projection center O to be perpendicular to the camera imaging surface 401, an X axis is a vertical direction, and a Y axis is a horizontal direction. The Z axis is called an optical axis. The intersection point o between the camera imaging surface 401 and the Z axis is defined as the origin of the camera imaging surface 401, the u axis is defined as the vertical direction, and the v axis is defined as the horizontal axis.

The pinhole camera model converts (projects) a three dimensional point A(X, Y, Z) into an imaging point q(u, v) on the imaging surface. The imaging point q(u, v) is obtained as an intersection point between a straight line connecting the three dimensional point A(X, Y, Z) to the projection center O and the camera imaging surface 401. The following formulas are established based on the depicted relationships.

$$u = f \times Y/Z$$

$$v = f \times X/Z$$

However, a real-world digital camera has an optical axis (Z axis) that deviates from the origin of the coordinates. The camera imaging surface 401 does not have a square grid of pixels but has a rectangular grid of pixels. The scale of three dimensional coordinates (X, Y, Z) differs from the scale of the coordinates (u, v) of the camera imaging surface 401.

Thus, the intersection point between the optical axis and the camera imaging surface 401 is changed into coordinates (cx, cy), and the focal distance is defines as (fu, fv) to include an aspect scale of the grid of pixels. The relationship between the three dimensional point A(X, Y, Z) and an imaging point q(u, v) is noted as follows.

Note that the digital camera of the embodiment is capable of capturing static and dynamic (moving) pictures of the wide-angle images. Hence, the digital camera of the embodiment is hereinafter referred to as a "wide-angle imaging camera (imaging device)". The wide-angle imaging camera is also capable of capturing images of a normal angle of view, and hence, the images taken by the wide-angle imaging camera are not limited to those of a wide angle of view. It is assumed that parameters (e.g., the focal distance f and the projection center O) of the wide-angle imaging camera that has taken the wide-angle images are already known.

$$\begin{pmatrix} u \\ v \\ 1 \end{pmatrix} \cong K \begin{pmatrix} X \\ Y \\ Z \end{pmatrix} \quad \cdots (1)$$

$$K = \begin{pmatrix} f_u & 0 & c_u \\ 0 & f_v & c_v \\ 0 & 0 & 1 \end{pmatrix} \quad \cdots (2)$$

K is called an inner parameter matrix. A symbol noted between the left-hand side and the right hand side in the above formula (1) indicates that there exists a non-zero scalar s that satisfies the following formula (3).

$$a = sb \quad \cdots (3)$$

This indicates that vectors on the left-hand side and the right-hand side allowed to be multiplied by a constant are equal.

Note that the imaging point q(u, v) of the camera imaging surface 401 represents coordinates of the camera coordinates system whereas the three dimensional point A(X, Y, Z) represents coordinates of the world coordinates system. In order to represent the three dimensional point A(X, Y, Z) with the camera coordinates, the world coordinates are rotated by using a rotation matrix R and translation t is performed. That is, the following coordinate transformation is performed.

The following illustrates coordinate rotation and translation with reference to FIG. 5. FIG. 5 is a diagram schematically illustrating examples of a world coordinate system 302 and a camera coordinate system 301. Here, $r_x$, $r_y$, and $r_z$ each indicate unit vectors representing corresponding directions x axis, y axis, and z axis of the camera coordinates in the world coordinate system 302. "X = (X, Y, Z)$^T$" represents world coordinates given by a point of the camera coordinates expressed by "x = (x, y, z)$^T$". Based on the above, the point A expressed by the camera coordinates may be as follows.

$$A = x r_x + y r_y + z r_z + t \quad \cdots (5)-1$$

To modify the above formula (5)-1, the camera coordinates "x = (x, y, z)$^T$" may be expressed by the following formulas (5)-2 and (5)-3 using the point A of the world coordinate system.

$$\begin{pmatrix} x \\ y \\ x \end{pmatrix} = \begin{pmatrix} r_x^T \\ r_y^T \\ r_z^T \end{pmatrix} A + \begin{pmatrix} r_x^T \\ r_y^T \\ r_z^T \end{pmatrix} t \quad \cdots (5)-2$$

$$R = \begin{pmatrix} r_x^T \\ r_y^T \\ r_z^T \end{pmatrix} \quad \cdots (5)-3$$

R is called a rotation matrix and t is called a translation vector. The imaging point q(u, v) and the three dimensional point A(X, Y, Z) may be expressed by the following formula (6) using the rotation matrix R and the translation vector t.

$$\begin{pmatrix} u \\ v \\ 1 \end{pmatrix} \cong K \left\{ R \begin{pmatrix} X \\ Y \\ Z \end{pmatrix} + t \right\}$$

$$= K[R \mid t] \begin{pmatrix} X \\ Y \\ Z \\ 1 \end{pmatrix} \qquad \cdots (6)$$

In the formula (6), [R|t] represents performing both rotation and translation.

Further, the following replacement is performed.

$$\widetilde{m} = \begin{pmatrix} u \\ v \\ 1 \end{pmatrix} \qquad \cdots (7)$$

$$\widetilde{M} = \begin{pmatrix} X \\ Y \\ Z \\ 1 \end{pmatrix} \qquad \cdots (8)$$

$$P = K[R \mid t] \qquad \cdots (9)$$

$$\widetilde{m} \cong P\widetilde{M} \qquad \cdots (10)$$

$$\widetilde{m} \cong \begin{pmatrix} P_{11} & P_{12} & P_{13} & P_{14} \\ P_{21} & P_{22} & P_{23} & P_{24} \\ P_{31} & P_{32} & P_{33} & P_{34} \end{pmatrix} M \qquad \cdots (11)$$

The formula (1) may be expressed by a simpler form taking the rotation and the translation of the three dimensional point into consideration. P represents a 3 x 4 matrix (3-by-4 matrix), and perspective projection transformation represents coordinate transformation performed by the perspective projection matrix P.

Note that real wide-angle imaging cameras exhibit distortion of lenses. One of the lens distortion models known in the art may be disclosed by Weng et. at. This model suggests the following formula to express coordinates within an image obtained after correction of distortions.

$(\widetilde{u}, \widetilde{v})$

Further, when (u0, v0) represent coordinates before the correction of distortions, and $k_1$ represents a distortion parameter (known in advance), the following formulas are established.

$$u_0 = \widetilde{u} + \kappa_1 \widetilde{u} \left( \widetilde{u}^2 + \widetilde{v}^2 \right)$$

$$v_0 = \widetilde{v} + \kappa_1 \widetilde{v}\left(\widetilde{u}^2 + \widetilde{v}^2\right)$$

The lens distortion may be removed by any known methods.

In the first embodiment, the inner parameter matrix K is already known, and the rotation matrix R and the translation vector t may be calculated by setting the camera coordinate system and the world coordinate system. Note that an identity matrix (or unit matrix) may be assigned to the rotation matrix R of the camera coordinates with respect to the world coordinates, and 0 may be assigned to the translation vector t without loss of generality. This allows equating the camera coordinate system with the world coordinate system. Thus, the first embodiment assigns an identity matrix (or unit matrix) to the rotation matrix R of the camera coordinates with respect to the world coordinates, and also assigns 0 to the translation vector t. The perspective projection matrix P is thus known. Alternatively, a measurer or the like may actually measure coordinates of six three-dimensional points A (i.e., measure coordinates of an existing 3D object), and assign the measured values to the formula (10) or (11) by imaging the object by the wide-angle imaging camera, thereby obtaining 12 elements of P. This case can actually measure the perspective projection matrix P of the first embodiment.

The perspective projection matrix P being known indicates that the three-dimensional point A may be converted into any imaging point q of the camera imaging surface 401. The three dimensional coordinates of the target object are unknown in practice; however, the three dimensional coordinates of the target object will be deleted as illustrated later. Hence, the practical values may remain unknown.

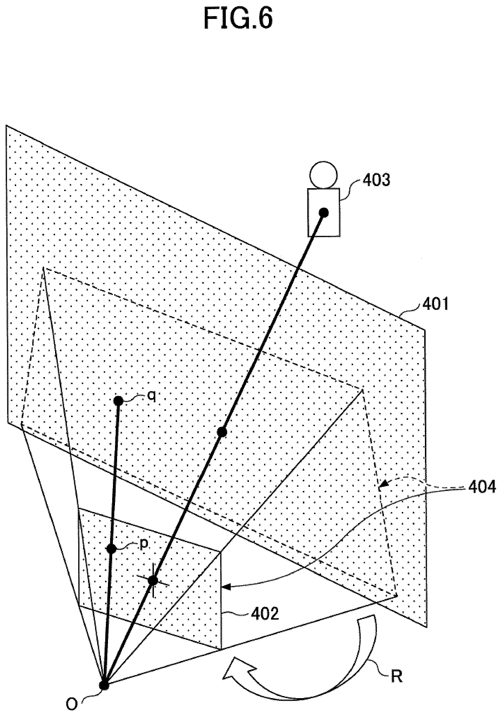

The following illustrates a virtual camera for extracting partial images with reference to FIG. 6. Partial images correspond to a wide-angle imaging range projected onto an imaging surface 402 (virtual plane) of the virtual camera. FIG. 6 is a diagram illustrating a relationship between an imaging surface 401 of the wide-angle imaging camera and the imaging surface 402 of the virtual camera. $P_{video}$ ($P_{video}$ is an example of a first perspective projection matrix) represents the perspective projection matrix of the wide-angle imaging camera that captures a moving picture of wide-angle images. $P_{video}$ is a known parameter as described earlier.

$P_{partial}$ ($P_{paritial}$ is an example of a second perspective projection matrix) represents the perspective projection matrix of the virtual camera. Since the rotation matrix R of the wide-angle imaging camera is an identity matrix and the translation vector t is 0, the rotation and translation with respect to the world coordinate system of the virtual camera correspond to the rotation and translation with respect to the wide-angle imaging camera. The calculation may thus become simpler. $P_{partial}$ may be expressed by the following formula (12), using the inner parameter matrix $K_{partial}$, the rotation matrix R with respect to the wide-angle imaging camera, and the translation vector t.

$$\boldsymbol{P}_{partial} = \boldsymbol{K}_{partial}[\boldsymbol{R} \mid \boldsymbol{t}] \quad \cdots (12)$$

The projection center O of the virtual camera is assumed to match the projection center O of the wide-angle imaging camera. Hence, the translation vector t may be t = 0. The rotation matrix R is set to move a position (e.g., the gravity (geometric) center or the center) of the target object to the center of the imaging surface 402 of the virtual camera. That is, the rotation matrix R is set to image the target object 403 at the center of the imaging surface 402. Since the camera coordinate system 301 is a standard coordinate system of the camera, the rotation matrix R is also known. The inner parameter matrix $K_{partial}$ of the virtual camera may be determined based on preferred widths of the partial images. $P_{partial}$ may thus be known.

Since the target object 403 is imaged at the center of the imaging surface 402 of the virtual camera, the imaging surface 402 of the virtual camera may be equated with the partial images 404 of the imaging surface 402 of the virtual camera.

The above has illustrated the preparation for extracting the partial images using the perspective projection method. The images are generated by the virtual camera that images the target object 403 based on the above-described preparation. The generated images correspond to partial images. The point p on the imaging surface 402 of the virtual camera may be converted into the imaging point q on the camera imaging surface 401 of the wide-angle imaging camera by the following formula (13).

$$\boldsymbol{q} = \boldsymbol{P}_{video}\boldsymbol{P}_{partial}^{T}(\boldsymbol{P}_{partial}\boldsymbol{P}_{partial}^{T})^{-1}\boldsymbol{p} \quad \cdots (13)$$

To calculate the formula (13), one of the following formulas a and b suitable for the wide-angle imaging camera or the virtual camera formula may be assigned to the formula (10).

$$q = P_{video}M \qquad \dots (a)$$

$$p = P_{partial}M \qquad \dots (b)$$

When M of the formula b that is expressed by p and an inverse matrix of $P_{partial}$ is assigned to the formula a, q may be expressed by $P_{video}$ and an inverse matrix of $P_{partial}$. Since $P_{partial}$ is not a regular matrix, the formula (13) is obtained using a relational expression ($P_{partial}^{-1} = P_{partial}^{T}(P_{partial} P_{partial}^{T})$) of a pseudo inverse matrix.

The partial image extracting part 105 may be able to compute coordinates corresponding to the current frame of the wide-angle image for pixels of the imaging surface 402 of the virtual camera and acquire pixel values of the wide-angle image. Thus, the imaging surface 402 of the virtual camera or a set of points q converted from the points p may be equated with the objective partial image 404 of the imaging surface 402 of the virtual camera.

Since the integer coordinates on the imaging surface 402 of the virtual camera will in practice be real numbers obtained by formula (13), an interpolation method such as nearest neighbor, bilinear, or bicubic interpolation may be used to actually acquire the pixel values.

OPERATION PROCESS

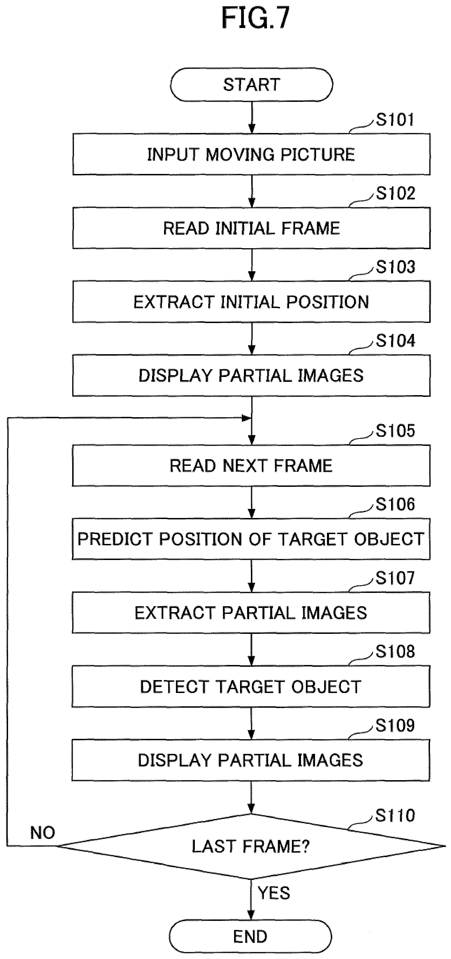

FIG. 7 is a flowchart illustrating a process performed by the image processing apparatus 100 to display partial images.

The moving picture input part 101 initially receives inputs of the moving picture (video) of the wide-angle images and stores the moving picture in the storage 108 (step S101). The moving picture input part 101 specifically stores the moving picture of the wide-angle images selected by the user in the storage 108.

The frame reader 102 subsequently reads an initial frame of the moving picture of the wide-angle images stored in the storage 108 (step S102).

The partial image extracting part 105 subsequently extracts an initial position of the target object 403 from the read frame (step S103). For example, the target object 403 may be selected by the user as described above.

The partial image extracting part 105 subsequently extracts the partial image including the initial position of the target object 403 by the above-described method (step S104). The partial image display part 107 displays the partial image 404 on the output device 202.

The frame reader 102 subsequently reads a next frame from the moving picture of the input wide-angle images as a current frame (step S105).

The target object position predictor 104 predicts a position of the target object 403 in the current frame from the position of the target object 403 in the previous frame (step S106). For example, the target object position predictor 104 may determine the position of the target object 403 in the previous frame as the positon of the target object 403 in the current frame. An illustration of step S106 may be added later.

The partial image extracting part 105 extracts the partial image 404 from the current frame to include the predicted position of the target object 403 (step S107). This step is performed simultaneously with step S104.

The target object detector 106 detects the position of the target object 403 from the extracted partial image 404 (step S108). The target object detector 106 specifically recognizes the target object 403 using image processing such as feature recognition, and extracts a circumscribed rectangle of the target object 403 and the gravity (geometric) center or the center of the target object 403 as the position of the target object 403.

The partial image 404 is extracted to include the position of the target object 403 detected by the partial image extracting part 105, and the partial image display part 107 displays the partial image 404 on the output device 202 (step S109). Specifically, the partial image 404 is not extracted based on the predicted position (step S107), but the partial image 404 is extracted from the current frame to include the position of the target object 403 actually extracted from the current frame. The partial image 404 having the target object 403 imaged at the center may thus be obtained. Step S109 may reuse the partial image 404 extracted in step S107 instead of extracting a new partial image. This will reduce processing time.

The frame reader 102 determines whether all the frames of the moving picture of input wide-angle images (step S110) have been read. When the frame reader 102 has read all the frames of the moving picture of the input wide-angle images, the process ends whereas when the frame reader 102 has not read all the frames of the moving picture of the input wide-angle images, the process returns to step S105.

PROCESS STEP S106

The following illustrates step S106 of predicting the position of the target object 403. The target object position predictor 104 may be able to predict the position of the target object 403 using a state space model, in addition to determining the position of the target object 403 in the previous frame as the position of the target object 403 in the current frame. This state space model considers a following relationship when $X_t$ represents a state value of the target object 403 in a $t^{th}$ frame, and $Y_t$ represents an observation position of the target object 403.

$$\begin{cases} \boldsymbol{x}_{t+1} = f(\boldsymbol{x}_t) + \varepsilon \\ \boldsymbol{y}_t = g(\boldsymbol{x}_t) + \eta \end{cases} \quad \cdots (14)$$

In the above formula (14), f represents a state transition function, g represents an observation function, and ε and η represent noise. Elements of $X_t$ may be vectors including a true position, velocity, acceleration, and the like of the target object 403. When f and g undergo linear conversion using the relationship of formula (11), internal states $X_{t+1}$ of one frame preceding the current frame may be obtained from the observation values obtained up to the t-th observation value $y_t$ using the Kalman filter such as the extended Kalman filter, the unscented Kalman filter and αβ filter. When f and g undergo nonlinear conversion using the relationship of formula (11), the internal states $X_{t+1}$ of one frame preceding the current frame may be obtained from the observation values obtained up to the t-th observation value $y_t$ using the particle filter. The position of the internal states $X_{t+1}$ corresponds to the position of the target object 403 in the current frame.

The above-described process enables automatic tracking of the target object 403 focused on by the user from the moving picture of the wide-angle images to display the target object 403 on the output device 202. The partial image 404 is extracted by the perspective projection conversion based on the predicted position of the target object 403. Thus, object tracking may be performed after the search range is narrowed down. This method facilitates high-rate detection of the target object 403. Further, the perspective projection conversion may reduce projection distortion, thereby implementing highly accurate tracking.

SECOND EMBODIMENT

A second embodiment illustrates an image processing apparatus 100 that detects the position of the target object 403 from the moving picture of input equidistant cylindrical images to display the partial image 404 including the target object 403.

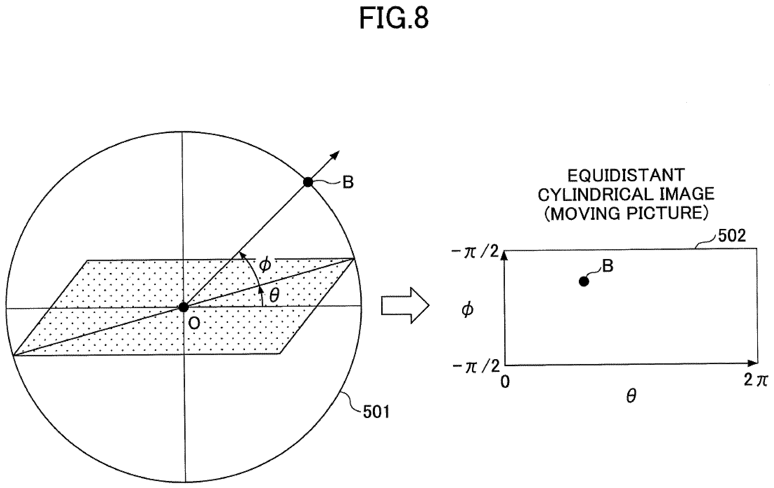

FIG. 8 is a diagram illustrating a corresponding relationship between an omnidirectional image 501 and an equidistant cylindrical image 502. As illustrated in FIG. 8, the equidistant cylindrical image 502 indicates an image obtained by specifying the latitude θ and the longitude φ from the center of the unit sphere (radial 1 of the sphere) representing the omnidirectional image 501 to indicate an imaging direction and sampling the pixel values for each interval having the equal latitude θ and longitude φ from the omnidirectional image 501. Specifying the latitude θ and longitude φ determines a point of the imaging direction, which is arranged in a two-dimensional plane based on the latitude θ and longitude φ to obtain the equidistant cylindrical image 502. The equidistant cylindrical image 502 is frequently used as a system for recording the omnidirectional image 501 moving pictures (videos) in practice. The omnidirectional image 501 in FIG. 8 indicates one frame of the omnidirectional image 501.

The functional block diagram of the image processing apparatus 100 according to the second embodiment is similar to that of the image processing apparatus 100 according to the first embodiment illustrated in FIG. 3. The operation process of the second embodiment is similar to that of the first embodiment illustrated in FIG. 7. In this description, components provided with the same reference numerals serve as the same functions of the above-described components; duplicated illustration of the same components is omitted and only the difference will be described below. The operation process of the partial image extracting part 105 in the second embodiment differs from that of the partial image extracting part 105 in the first embodiment.

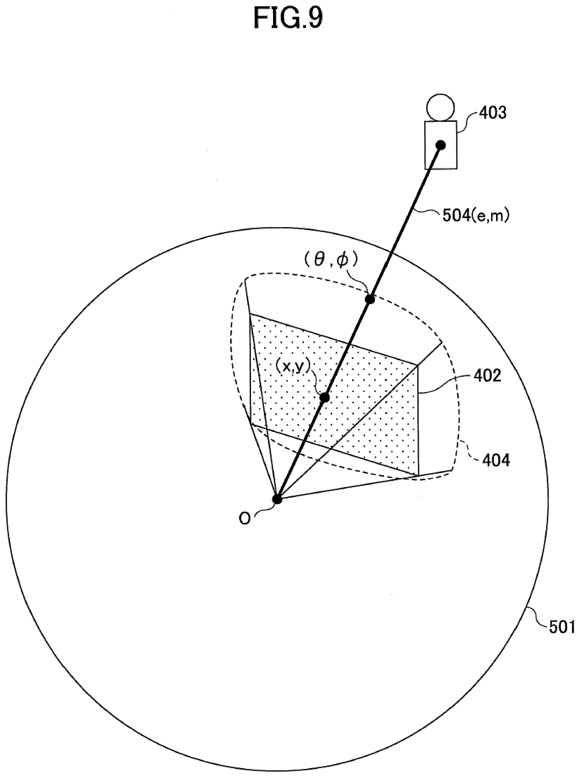

The following illustrates a process of the partial image extracting part 105 in the second embodiment with reference to FIG. 9. FIG. 9 is a diagram schematically illustrating an imaging surface 402 of a virtual camera with respect to the omnidirectional image 501. The virtual camera configured to capture the position of the target object 403 at the center of the image is set. P represents the perspective projection matrix of the virtual camera. A straight line 504 connecting the target object 403 and the projection center O of the virtual camera passes through the center of the imaging surface 402 of the virtual camera.

The projection center O of the virtual camera matches the center of the unit sphere representing the omnidirectional image 501 (the projection center of the equidistant cylindrical image).

A point (x,y) on the imaging surface 402 imaged by the virtual camera and the straight line 504 in the three-dimensional space passing through the projection center O are calculated. e represents the direction of the straight line 504, and m represents any point on the straight line 504. e and m are obtained from the perspective projection matrix P of the virtual camera using the following formulas (15) and (16).

$$\boldsymbol{e} = \begin{pmatrix} xp_{31} - p_{11} \\ xp_{32} - p_{12} \\ xp_{33} - p_{13} \end{pmatrix} \times \begin{pmatrix} yp_{31} - p_{21} \\ yp_{32} - p_{22} \\ yp_{33} - p_{23} \end{pmatrix} \qquad \cdots (15)$$

$$\boldsymbol{m} = -\begin{pmatrix} p_{11} & p_{12} & p_{13} \\ p_{21} & p_{22} & p_{23} \\ p_{31} & p_{32} & p_{33} \end{pmatrix}^{-1} \begin{pmatrix} p_{14} \\ p_{24} \\ p_{34} \end{pmatrix} \qquad \cdots (16)$$

An element in the i$^{th}$ row and the j$^{th}$ column of the perspective projection matrix p is represented by $p_{ij}$. According to the formulas (15) and (16), the direction e and the point m of the straight line 504 may be calculated by specifying the point (x,y) on the imaging surface 402. The projection center (the center of the unit sphere) O of the equidistant cylindrical image that matches the projection center O of the virtual camera may simplify the calculation. In this case, m = 0, and θ and φ may be calculated from the direction e of the straight line 504.

$$\begin{cases} \theta = \tan \dfrac{\boldsymbol{e}_2}{\boldsymbol{e}_1} \\ \varphi = \tan \dfrac{\boldsymbol{e}_3}{\sqrt{\boldsymbol{e}_1^2 + \boldsymbol{e}_2^2}} \end{cases} \qquad \cdots (17)$$

e1 to e3 represent unit vectors in x-axis, y-axis, and z-axis directions of the camera coordinate system. The direction of the straight line 504 is calculated as θ (the latitude) and φ (the longitude) based on the unit vectors e1 to e3. The image captured by the virtual camera may be obtained by acquiring the pixel values of the pixels on the unit sphere specified by θ (the latitude) and φ (the longitude) from the equidistant cylindrical image 502. The image captured (the captured image) by the virtual camera may be represented by the partial image 404 in a manner similar to the first embodiment.

The above-described method converts the target object 403 in the perspective projection on the imaging surface 402 of the virtual camera, making it possible to extract the partial image 404 from the moving picture of the equidistant cylindrical image 502. Object tracking performed on the extracted the partial image 404 enables narrowing the search range and reducing the distortion of the equidistant cylindrical image 502, thereby implementing high tracking accuracy.

The moving pictures of the equidistant cylindrical image 502 have mutually connected image ends. The related art technology requires a tracking process (e.g., detecting an object positioned near a position θ=2π, and searching for an image near the position θ=0 in the subsequent frame) in order to track an object moving from the position θ=2π to the position θ=0. The second embodiment enables the execution of the object tracking process with respect to the extracted partial image 404 without applying an additional process.

THIRD EMBODIMENT

A third embodiment illustrates an image processing apparatus 100 that detects a position of an important object from the moving picture of input wide-angle images to display the partial image 404 including the important object.

The functional block diagram of the image processing apparatus 100 according to the third embodiment is similar to FIG. 3 of the image processing apparatus 100 according to the first embodiment. Note that the operation process of the initial position extracting part 103 in the third embodiment differs from that of the initial position extracting part 103 in the first embodiment. The operation process of the third embodiment is similar to that of the first embodiment illustrated in FIG. 3.

The initial position extracting part 103 of the third embodiment detects a position of the important object from the initial frame of the input moving picture. A saliency mapping technology may be used for detecting the important object.

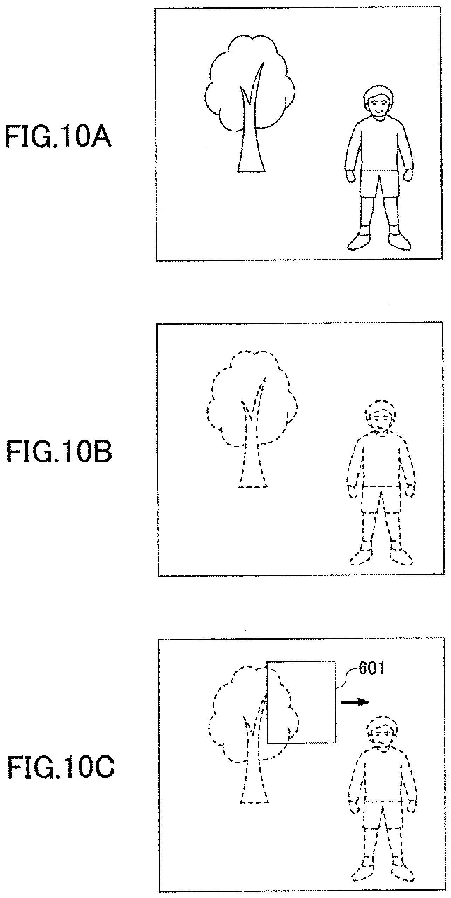

FIGS. 10A to 10C are diagrams illustrating a process example of detecting saliency. As illustrated in FIGS. 10A and 10B, the initial position extracting part 103 calculates edge amounts at respective positions in the image using, for example, a Laplacian filter or Gabor filter.

As illustrated in FIG. 10C, the initial position extracting part 103 detects that there is an important object within a window when the initial position extracting part 103 scans an image with the specific window 601 and detects a statistical difference between an edge amount distribution within the window (e.g., a predetermined range including the center) and an edge amount distribution of a peripheral part of the window.

The initial position extracting part 103 may detect the statistical difference by calculating a distance between the edge distributions based on the Kullback-Leibler divergence or divergence information (also called relative entropy, or Kullback-Leibler divergence) or the Bhattacharyya distance, and determining the threshold. The Kullback-Leibler divergence is a measure of the difference (distance) between two probability distributions. The edge distribution within the window and the edge distribution of the peripheral part of the window are used instead of the two probability distributions. The Bhattacharyya distance is a measure of the distance between the two discrete probability distributions, which is calculated by representing the edge distribution within the window and the edge distribution of the peripheral part of the window with a histogram (i.e., the number of edges having different edge intensities).

Note that various amounts may be used as the feature amounts in addition to the edge amount. Color distribution, lightness, contract, blinking, or a direction may be used as the feature amount. It may also be effective to supply training image data to machine leaning such as neural networks (e.g., deep learning) to allow them to automatically extract the feature amounts. The feature amounts may also be extracted by scale-invariant feature transform (SIFT) or speeded up robust features (SURF).

The third embodiment may also be applied to any one of the moving picture of the wide-angle images of the first embodiment and the moving picture of the equidistant cylindrical images of the second embodiment.

As described above, the third embodiment may detect the important object from the moving picture, and determine that the detected position of the detected important object is the initial position of the detected important, which enables displaying the moving picture of automatically detecting the important object without the user's explicit specification of the target object.

FOURTH EMBODIMENT

A fourth embodiment illustrates an image processing apparatus 100 that detects respective positions of two or more target objects 403 from the moving picture of input wide-angle images to display the partial images 404 including the target objects 403.

In the fourth embodiment, the initial position extracting part 103 and the target object detector 106 detects two or more target objects 403 by the method illustrated in the first embodiment or the third embodiment. Since there are two or more target objects 403, the partial image extracting part 105 extracts partial images corresponding to the number of the target objects 403.

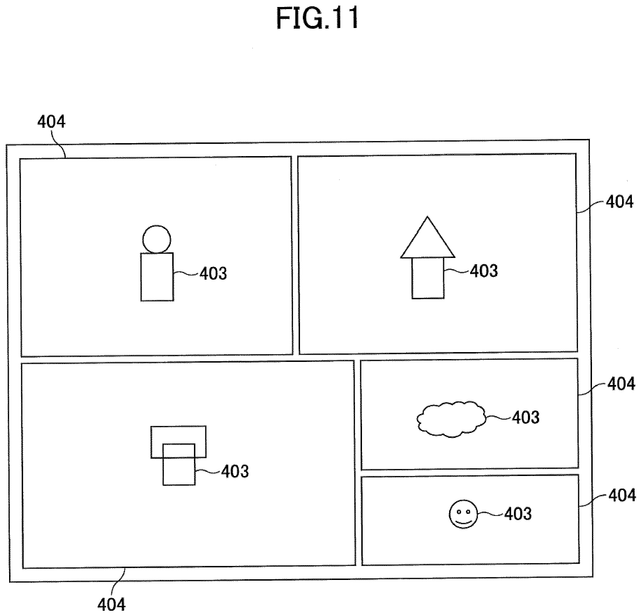

The partial image display part 107 combines the two or more partial images 404 and displays the combined partial images 404 as one image. FIG. 11 is a diagram illustrating a display example of partial images displayed on the output device 202. The partial images may have different importance levels. In such a case, the larger partial images may be displayed in accordance with higher levels of importance, as illustrated in FIG. 11.

The partial image display part 107 may preferably display user interfaces to receive change in the layout of the partial images 404 and the sizes of the partial images 404, and receive switching of display/nondisplay of the partial images 404 on a screen displaying the target objects 403. This configuration enables the user to focus on a desired one of the target objects 403 even if two or more target objects 403 are displayed.

Thus, the fourth embodiment may generate a moving picture simultaneously tracking two or more objects.

OTHER EMBODIMENTS

The preferred embodiments and examples are described above; however, the present invention is not limited to those embodiments and examples. Various alterations and modifications may be made within the scope without departing from the gist of the present invention.

For example, FIG. 3 has illustrated the functionality of the initial position extracting part 103 based on several process units. However, the present embodiments are not limited by the method of dividing the process unit or names of the process units. The process of the image processing apparatus 100 may further be divided into a large number of process units in accordance with the process contents. The process of the image processing apparatus 100 may be divided to allow each of the process units to further include a large number of processes.

An aspect of the disclosed embodiments may provide an image processing apparatus capable of tracking the target objects included in the moving picture (video) with high accuracy.

The present invention is not limited to the specifically disclosed embodiments, and variations and modifications may be made without departing from the scope of the present invention as defined in the claims.

**Claims**

1. An image processing apparatus displaying a target object in wide angle image from a moving picture, the image processing apparatus (100) comprising:

a target object detector (106) configured to detect the target object from a partial image of a first frame with a first display order from the moving picture of the input wide-angle images;

a target object position predictor (104) configured to predict a position of the target object in a second frame with a second display order from the moving picture of the input wide-angle images based on a position of the target object in the first frame, the second display order being subsequent to the first display order of the first frame;

a partial image extracting unit (105) configured to extract a partial image from the second frame, the partial image including a predicted position of a target object and being obtained by perspectively projecting three dimensional coordinates of a portion of the second frame including the target object having the predicted position on a virtual plane; and

a partial image display unit (107) configured to display a partial image (404) extracted from the second frame on a display device, wherein the partial image is extracted from the second frame based on the detected position of the target object by the target object detector (106) from the partial image extracted based on the predicted position of the target object in the second frame.

2. The image processing apparatus according to claim 1, wherein

the partial image extracting unit (105) extracts the partial image from the second frame using a perspective projection matrix perspectively projecting the three dimensional coordinates of the target object having the position predicted in the second frame on the virtual plane centering the position of the target object.

3. The image processing apparatus according to claim 2, wherein

the partial image extracting unit (105) by inputting all the coordinates of the virtual plane to a product of a first perspective projection matrix perspectively projecting the three dimensional coordinates of the target object having the position predicted in the second frame on an imaging surface of the moving picture imaged by an imaging device and an inverse matrix of a second perspective projection matrix perspectively projecting the three dimensional coordinates of the target object having the position predicted in the second frame on the virtual plane so as to extract pixel values of the obtained coordinates of the second frame as the partial image.

4. The image processing apparatus according to claim 1, wherein

the partial image extracting unit (105) generates a perspective projection matrix perspectively projecting the three dimensional coordinates of the target object having the position predicted in the second frame on an imaging surface of the virtual camera imaging the target object at a center of the imaging surface using a center of a unit sphere as a projection center of the virtual camera,

specifies each of positions on the sphere based on a straight line passing through the imaging surface and the projection center, the straight line being expressed using the perspective projection matrix for each of the pixels of the imaging surface, and

extracts pixel values of the pixels in the second frame corresponding to the specified positions as the partial image.

5. The image processing apparatus according to any one of claims 1 to 4, further comprising:

a target object position extracting unit configured to receive an operation for specifying the target object to extract the position of the target object, wherein

the target object position predictor (104) predicts the position of the target object in the second frame using the position of the target object extracted by the target object position extracting unit.

6. The image processing apparatus according to any one of claims 1 to 4, further comprising:

a target object position extracting unit configured to perform an image process on the first frame to extract the target object, wherein

the target object position predictor (104) predicts the position of the target object in the second frame using the position of the target object extracted by the target object position extracting unit.

7. The image processing apparatus according to any one of claims 1 to 6, wherein

when a plurality of the target objects are imaged in one frame,

the partial image extracting unit (105) extracts a plurality of the partial images including respective positions of the target objects, and

the partial image display unit (107) simultaneously displays the plurality of the partial images on the display device.

8. The image processing apparatus according to any one of claims 1 to 7, wherein the moving picture is a moving picture of omnidirectional images.

9. An image processing method performed by an image processing apparatus (100) displaying a target object in wide angle image from a moving picture, the image processing method comprising:

causing a target object detector (106) to detect the target object from a partial image of a first frame with a first display order from the moving picture of the input wide-angle images;
causing a target object position predictor (104) to predict a position of the target object in a second frame with a second display order from the moving picture of the input wide-angle images based on a position of the target object in the first frame, the second display order being subsequent to the first display order of the first frame;
causing a partial image extracting unit (105) to extract a partial image from the second frame, the partial image including a predicted position of a target object being obtained by perspectively projecting three dimensional coordinates of the target object having the predicted position in the second frame on a virtual plane; and
causing a partial image display unit (107) to display the partial image extracted from the second frame on a display device, wherein the partial image is extracted from the second frame based on the detected position of the target object by the target object detector (106) from the partial image extracted based on the predicted position of the target object in the second frame.

## Patentansprüche

1. Bildverarbeitungsvorrichtung, die ein Zielobjekt in einem Weitwinkelbild aus einem Bewegtbild anzeigt, wobei die Bildverarbeitungsvorrichtung (100) umfasst:

einen Zielobjektermittler (106), der dafür konfiguriert ist, das Zielobjekt aus einem Teilbild eines ersten Rahmens mit einer ersten Anzeigereihenfolge aus dem Bewegtbild der eingegebenen Weitwinkelbilder zu ermitteln;
einen Zielobjektposition-Vorhersager (104), der dafür konfiguriert ist, auf der Grundlage einer Position des Zielobjekts im ersten Rahmen eine Position des Zielobjekts in einem zweiten Rahmen mit einer zweiten Anzeigereihenfolge aus dem Bewegtbild der eingegebenen Weitwinkelbilder vorherzusagen, wobei die zweite Anzeigereihenfolge auf die erste Anzeigereihenfolge des ersten Rahmens folgt;
eine Teilbild-Extraktionseinheit (105), die dafür konfiguriert ist, ein Teilbild aus dem zweiten Rahmen zu extrahieren, wobei das Teilbild eine vorhergesagte Position eines Zielobjekts einschließt und durch perspektivisches Projizieren von dreidimensionalen Koordinaten eines Abschnitts des zweiten Rahmens, der das Zielobjekt mit der vorhergesagten Position einschließt, auf einer virtuellen Ebene erlangt wird; und
eine Teilbild-Anzeigeeinheit (107), die dafür konfiguriert ist, ein aus dem zweiten Rahmen extrahiertes Teilbild (404) auf einer Anzeigevorrichtung anzuzeigen, worin das Teilbild auf der Grundlage der Position des Zielobjekts aus dem zweiten Rahmen extrahiert wird, die durch den Zielobjektermittler (106) aus dem Teilbild ermittelt wurde, das auf der Grundlage der vorhergesagten Position des Zielobjekts im zweiten Rahmen extrahiert wurde.

2. Bildverarbeitungsvorrichtung nach Anspruch 1, worin die Teilbild-Extraktionseinheit (105) das Teilbild aus dem zweiten Rahmen unter Verwendung einer Perspektivprojektionsmatrix extrahiert, welche die dreidimensionalen Koordinaten des Zielobjekts mit der vorhergesagten Position im zweiten Rahmen perspektivisch auf die virtuelle Ebene projiziert, wobei die Position des Zielobjekts zentriert wird.

3. Bildverarbeitungsvorrichtung nach Anspruch 2, worin die Teilbild-Extraktionseinheit (105) alle Koordinaten der virtuellen Ebene in ein Produkt aus einer ersten Perspektivprojektionsmatrix eingibt, welche die dreidimensionalen Koordinaten des Zielobjekts mit der vorhergesagten Position im zweiten Rahmen perspektivisch auf eine Abbildungsfläche des Bewegtbildes projiziert, die durch eine Bildaufnahmevorrichtung abgebildet wird, und einer inversen Matrix einer zweiten Perspektivprojektionsmatrix, welche die dreidimensionalen Koordinaten des Zielobjekts mit der vorhergesagten Position im zweiten Rahmen auf die virtuelle Ebene perspektivisch projiziert, um dadurch Bildpunktwerte der erlangten Koordinaten des zweiten Rahmens als das Teilbild zu extrahieren.

4. Bildverarbeitungsvorrichtung nach Anspruch 1, worin

die Teilbild-Extraktionseinheit (105) eine Perspektivprojektionsmatrix erzeugt, welche die dreidimensionalen Koordinaten des Zielobjekts mit der vorhergesagten Position im zweiten Rahmen perspektivisch auf eine Abbildungsoberfläche der virtuellen Kamera projiziert, die das Zielobjekt in einer Mitte der Abbildungsoberfläche abbildet, wobei ein Mittelpunkt einer Einheitskugel als Projektionszentrum der virtuellen Kamera verwendet wird,

auf der Grundlage einer geraden Linie, die durch die Bildfläche und das Projektionszentrum verläuft, jede der Positionen auf der Kugel festlegt, wobei die gerade Linie unter Verwendung der Perspektivprojektionsmatrix für jeden der Bildpunkte der Bildfläche ausgedrückt wird, und

Bildpunktwerte der Bildpunkte im zweiten Rahmen, die den festgelegten Positionen entsprechen, als das Teilbild extrahiert.

5. Bildverarbeitungsvorrichtung nach einem der Ansprüche 1 bis 4, ferner umfassend:

eine Zielobjektposition-Extraktionseinheit, die dafür konfiguriert ist, eine Operation zum Festlegen des Zielobjekts zu empfangen, um die Position des Zielobjekts zu extrahieren, worin

der Zielobjektposition-Vorhersager (104) die Position des Zielobjekts im zweiten Rahmen unter Verwendung der durch die Zielobjektposition-Extraktionseinheit extrahierten Position des Zielobjekts vorhersagt.

6. Bildverarbeitungsvorrichtung nach einem der Ansprüche 1 bis 4, ferner umfassend:

eine Zielobjektposition-Extraktionseinheit, die dafür konfiguriert ist, eine Bildverarbeitung auf dem ersten Rahmen durchzuführen, um das Zielobjekt zu extrahieren, worin

der Zielobjektposition-Vorhersager (104) die Position des Zielobjekts im zweiten Rahmen unter Verwendung der durch die Zielobjektposition-Extraktionseinheit extrahierten Position des Zielobjekts vorhersagt.

7. Bildverarbeitungsvorrichtung nach einem der Ansprüche 1 bis 6, worin wenn eine Vielzahl der Zielobjekte in einem Rahmen abgebildet wird:

die Teilbild-Extraktionseinheit (105) eine Vielzahl der Teilbilder einschließlich jeweiliger Positionen der Zielobjekte extrahiert, und

die Teilbild-Anzeigeeinheit (107) gleichzeitig die Vielzahl der Teilbilder auf der Anzeigevorrichtung anzeigt.

8. Bildverarbeitungsvorrichtung nach einem der Ansprüche 1 bis 7, worin das Bewegtbild ein Bewegtbild aus omnidirektionalen Bildern ist.

9. Bildverarbeitungsverfahren, das durch eine Bildverarbeitungsvorrichtung (100) durchgeführt wird, die ein Zielobjekt im Weitwinkelbild aus einem Bewegtbild anzeigt, wobei das Bildverarbeitungsverfahren umfasst:

Veranlassen eines Zielobjektermittlers (106), das Zielobjekt aus einem Teilbild eines ersten Rahmens mit einer ersten Anzeigereihenfolge aus dem Bewegtbild der eingegebenen Weitwinkelbilder zu ermitteln;

Veranlassen eines Zielobjektposition-Vorhersagers (104), auf der Grundlage einer Position des Zielobjekts im ersten Rahmen eine Position des Zielobjekts in einem zweiten Rahmen mit einer zweiten Anzeigereihenfolge aus dem Bewegtbild der eingegebenen Weitwinkelbilder vorherzusagen, wobei die zweite Anzeigereihenfolge auf die erste Anzeigereihenfolge des ersten Rahmens folgt;

Veranlassen einer Teilbild-Extraktionseinheit (105), ein Teilbild aus dem zweiten Rahmen zu extrahieren, wobei das Teilbild eine vorhergesagte Position eines Zielobjekts einschließt, die durch perspektivisches Projizieren von dreidimensionalen Koordinaten des Zielobjekts mit der vorhergesagten Position im zweiten Rahmen auf eine virtuelle Ebene erlangt wird; und

Veranlassen einer Teilbild-Anzeigeeinheit (107), das aus dem zweiten Rahmen extrahierte Teilbild auf einer Anzeigevorrichtung anzuzeigen, worin das Teilbild auf der Grundlage der Position des Zielobjekts aus dem zweiten Rahmen extrahiert wird, die durch den Zielobjektermittler (106) aus dem Teilbild ermittelt wurde, das auf der Grundlage der vorhergesagten Position des Zielobjekts im zweiten Rahmen extrahiert wurde.

## Revendications

1. Appareil de traitement d'image qui affiche un objet cible dans une image grand-angle en provenance d'une séquence de film, l'appareil de traitement d'image (100) comprenant :

un détecteur d'objet cible (106) qui est configuré de manière à ce qu'il détecte l'objet cible à partir d'une image partielle d'un premier photogramme selon un premier ordre d'affichage en provenance de la séquence de film des images grand-angle d'entrée ;

un moyen de prédiction de position d'objet cible (104) qui est configuré de manière à ce qu'il prédise une position de l'objet cible dans un second photogramme selon un second ordre d'affichage en provenance de la séquence de film des images grand-angle d'entrée sur la base d'une position de l'objet cible dans le premier photogramme, le second ordre d'affichage faisant suite au premier ordre d'affichage du premier photogramme ;

une unité d'extraction d'image partielle (105) qui est configurée de manière à ce qu'elle extraie une image partielle à partir du second photogramme, l'image partielle incluant une position prédite d'un objet cible et étant obtenue en projetant en perspective des coordonnées tridimensionnelles d'une partie du second photogramme incluant l'objet cible qui présente la position prédite sur un plan virtuel ; et

une unité d'affichage d'image partielle (107) qui est configurée de manière à ce qu'elle affiche une image partielle (404) qui est extraite à partir du second photogramme sur un dispositif d'affichage, dans lequel l'image partielle est extraite à partir du second photogramme sur la base de la position détectée de l'objet cible par le détecteur d'objet cible (106) à partir de l'image partielle qui est extraite sur la base de la position prédite de l'objet cible dans le second photogramme.

2.  Appareil de traitement d'image selon la revendication 1, dans lequel :
    l'unité d'extraction d'image partielle (105) extrait l'image partielle à partir du second photogramme en utilisant une matrice de projection en perspective qui projette en perspective les coordonnées tridimensionnelles de l'objet cible qui présente la position qui est prédite dans le second photogramme sur le plan virtuel en centrant la position de l'objet cible.

3.  Appareil de traitement d'image selon la revendication 2, dans lequel :
    l'unité d'extraction d'image partielle (105) entre toutes les coordonnées du plan virtuel sur un produit d'une première matrice de projection en perspective qui projette en perspective les coordonnées tridimensionnelles de l'objet cible qui présente la position qui est prédite dans le second photogramme sur une surface de formation d'image de la séquence de film qui est imagée au moyen d'un dispositif imageur et d'une matrice inverse d'une seconde matrice de projection en perspective qui projette en perspective les coordonnées tridimensionnelles de l'objet cible qui présente la position qui est prédite dans le second photogramme sur le plan virtuel de manière à extraire des valeurs de pixel des coordonnées obtenues du second photogramme en tant qu'image partielle.

4.  Appareil de traitement d'image selon la revendication 1, dans lequel :

    l'unité d'extraction d'image partielle (105) génère une matrice de projection en perspective qui projette en perspective les coordonnées tridimensionnelles de l'objet cible qui présente la position qui est prédite dans le second photogramme sur une surface de formation d'image de la caméra virtuelle qui forme l'image de l'objet cible au niveau d'un centre de la surface de formation d'image en utilisant un centre d'une sphère unitaire en tant que centre de projection de la caméra virtuelle ;

    elle spécifie chacune de positions sur la sphère sur la base d'une ligne droite qui traverse la surface de formation d'image et le centre de projection, la ligne droite étant exprimée en utilisant la matrice de projection en perspective pour chacun des pixels de la surface de formation d'image ; et

    elle extrait des valeurs de pixel des pixels dans le second photogramme qui correspondent aux positions spécifiées en tant qu'image partielle.

5.  Appareil de traitement d'image selon l'une quelconque des revendications 1 à 4, comprenant en outre :
    une unité d'extraction de position d'objet cible qui est configurée de manière à ce qu'elle reçoive une opération pour spécifier l'objet cible afin d'extraire la position de l'objet cible ; dans lequel :
    le moyen de prédiction de position d'objet cible (104) prédit la position de l'objet cible dans le second photogramme en utilisant la position de l'objet cible qui est extraite par l'unité d'extraction de position d'objet cible.

6.  Appareil de traitement d'image selon l'une quelconque des revendications 1 à 4, comprenant en outre :
    une unité d'extraction de position d'objet cible qui est configurée de manière à ce qu'elle réalise un traitement d'image sur le premier photogramme de manière à extraire l'objet cible ; dans lequel :
    le moyen de prédiction de position d'objet cible (104) prédit la position de l'objet cible dans le second photogramme en utilisant la position de l'objet cible qui est extraite par l'unité d'extraction de position d'objet cible.

7.  Appareil de traitement d'image selon l'une quelconque des revendications 1 à 6, dans lequel :

lorsqu'une pluralité d'objets cible sont imagés dans un seul photogramme,

l'unité d'extraction d'image partielle (105) extrait une pluralité des images partielles incluant des positions respectives des objets cible ; et

l'unité d'affichage d'image partielle (107) affiche simultanément la pluralité des images partielles sur le dispositif d'affichage.

8. Appareil de traitement d'image selon l'une quelconque des revendications 1 à 7, dans lequel la séquence de film est une séquence de film constituée par des images omnidirectionnelles.

9. Procédé de traitement d'image réalisé par un appareil de traitement d'image (100) qui affiche un objet cible dans une image grand-angle en provenance d'une séquence de film, le procédé de traitement d'image comprenant :

le fait d'amener un détecteur d'objet cible (106) à détecter l'objet cible à partir d'une image partielle d'un premier photogramme selon un premier ordre d'affichage en provenance de la séquence de film des images grand-angle d'entrée ;

le fait d'amener un moyen de prédiction de position d'objet cible (104) à prédire une position de l'objet cible dans un second photogramme selon un second ordre d'affichage en provenance de la séquence de film des images grand-angle d'entrée sur la base d'une position de l'objet cible dans le premier photo gramme, le second ordre d'affichage faisant suite au premier ordre d'affichage du premier photo gramme ;

le fait d'amener une unité d'extraction d'image partielle (105) à extraire une image partielle à partir du second photogramme, l'image partielle incluant une position prédite d'un objet cible et étant obtenue en projetant en perspective des coordonnées tridimensionnelles de l'objet cible qui présente la position prédite dans le second photogramme sur un plan virtuel ; et

le fait d'amener une unité d'affichage d'image partielle (107) à afficher l'image partielle qui est extraite à partir du second photogramme sur un dispositif d'affichage, dans lequel l'image partielle est extraite à partir du second photogramme sur la base de la position détectée de l'objet cible par le détecteur d'objet cible (106) à partir de l'image partielle qui est extraite sur la base de la position prédite de l'objet cible dans le second photogramme.

## FIG.1A

## FIG.1B

## FIG.2

# FIG.3

~100

## IMAGE PROCESSING APPARATUS

~101

MOVING PICTURE INPUT PART

~102

FRAME READER

~103

INITIAL POSITION
EXTRACTING PART

~104

TARGET OBJECT
POSITION PREDICTOR

~105

PARTIAL IMAGE
EXTRACTING PART

~106

TARGET OBJECT DETECTOR

~107

PARTIAL IMAGE DISPLAY PART

~108

STORAGE

~2100

IMAGE PROCESSING
PROGRAM

# FIG.4

# FIG.5

# FIG.6

# FIG.7

```
              ┌─────────────┐
              │    START    │
              └─────────────┘
                     │
                     ▼                    S101
        ┌──────────────────────────┐
        │   INPUT MOVING PICTURE    │
        └──────────────────────────┘
                     │
                     ▼                    S102
        ┌──────────────────────────┐
        │     READ INITIAL FRAME    │
        └──────────────────────────┘
                     │
                     ▼                    S103
        ┌──────────────────────────┐
        │   EXTRACT INITIAL POSITION │
        └──────────────────────────┘
                     │
                     ▼                    S104
        ┌──────────────────────────┐
        │   DISPLAY PARTIAL IMAGES  │
        └──────────────────────────┘
                     │
                     ▼                    S105
        ┌──────────────────────────┐
        │      READ NEXT FRAME      │
        └──────────────────────────┘
                     │
                     ▼                    S106
        ┌──────────────────────────┐
        │ PREDICT POSITION OF TARGET OBJECT │
        └──────────────────────────┘
                     │
                     ▼                    S107
        ┌──────────────────────────┐
        │   EXTRACT PARTIAL IMAGES  │
        └──────────────────────────┘
                     │
                     ▼                    S108
        ┌──────────────────────────┐
        │     DETECT TARGET OBJECT  │
        └──────────────────────────┘
                     │
                     ▼                    S109
        ┌──────────────────────────┐
        │   DISPLAY PARTIAL IMAGES  │
        └──────────────────────────┘
                     │
                     ▼                    S110
    NO      ◇──────────────────────◇
    ◄───────    LAST FRAME?
            ◇──────────────────────◇
                     │ YES
                     ▼
              ┌─────────────┐
              │     END     │
              └─────────────┘
```

# FIG.8

EQUIDISTANT
CYLINDRICAL IMAGE
(MOVING PICTURE)

EP 3 093 822 B1

# FIG.9

FIG.10A

FIG.10B

FIG.10C

# FIG.11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004046647 A

- US 6924832 A